Europäisches Patentamt

**European Patent Office**

**Office européen des brevets**

(19)

(11) Numéro de publication: **0 102 861**

**A1**

(12)

# DEMANDE DE BREVET EUROPEEN

(21) Numéro de dépôt: **83401441.7**

(22) Date de dépôt: **12.07.83**

(51) Int. Cl.³: **A 01 K 1/01**
**E 03 D 5/01**

(30) Priorité: **13.07.82 FR 8212594**

(43) Date de publication de la demande:
**14.03.84 Bulletin 84/11**

(84) Etats contractants désignés:
**AT BE CH DE FR GB IT LI LU NL SE**

(71) Demandeur: **Société URBATECH ORGANISATION S.A.**
**33 rue Eugène Gilbert**
**F-63000 Clermont Ferrand(FR)**

(72) Inventeur: **Ponce, Max**
**10bis Avenue Anatole France**
**F-63130 Royat(FR)**

(72) Inventeur: **Dumarcher, Gérard**
**Quartier Le Peyreras**
**F-84500 Bollene(FR)**

(74) Mandataire: **Chanet, Jacques**
**B.P. 27 95bis avenue de Royat**
**F-63400 Chamalières(FR)**

(54) **Ilot d'hygiène, pour chiens notamment.**

(57) La présente invention a pour objet un lieu d'aisance pour des animaux domestiques tels que chiens.

Un dispositif selon l'invention est caractérisé en ce qu'il comprend une bordure massive 5 entourant le tapis 6 et la colonne 2, ladite bordure massive comportant un caniveau 7 collecteur autour du pied de la colonne, et en ce que la colonne comprend une partie haute 3 et une partie basse 4 à parois lisses, la partie haute formant une corniche périphérique tout autour et au-dessus de la partie basse, une rampe d'aspersion 46, des parois lisses étant disposées sous ladite corniche, la partie haute étant destinée à loger des moyens d'alimentation en eau et de traitement de celle-ci, la partie basse étant destinée à loger des moyens d'entraînement du tapis.

EP 0 102 861 A1

./...

fig.2

La présente invention relève à la fois du domaine de l'élevage des animaux et de celui de l'aménagement des lieux publics en vue de leur propreté et elle a plus particulièrement pour objet un lieu d'aisance pour des animaux domestiques tels que chiens.

L'urbanisation croissante et l'engouement du public pour les chiens notamment ont créé un problème d'hygiène en milieu urbain, problème lié à la défécation de ces animaux dans les lieux publics. Un îlot d'aisance est décrit notamment d'une manière très général dans un brevet français 2 460 612.

La présente invention se donne pour but d'aménager un îlot d'aisance du genre de l'îlot précité, en tenant compte de certains impératifs liés aux instincts et habitudes des animaux d'une part, d'autre part à l'implantation en milieu urbain de tels îlots.

Selon la présente invention, un dispositif de nécessité pour animaux tels que chiens, du genre comprenant un tapis roulant sur lequel l'animal est amené à faire ses besoins et des moyens de nettoyage du tapis incorporés dans une plateforme située sensiblement au niveau du sol, et comprenant en outre une colonne contenant les moyens de commande de la rotation du tapis comporte des caractéristiques générales de deux catégories : une première catégorie liée plutôt à l'organisation externe et aux parties fixes du dispositif et une seconde catégorie liée plutôt à l'organisation interne du dispositif et à ses parties mobiles.

Selon les caractéristiques de la première catégorie, un dispositif de l'invention comprend essentiellement une bordure massive entourant le tapis et la colonne, ladite bordure massive comportant un caniveau collecteur autour du pied de la colonne ; la colonne comprend elle-même une partie haute et une partie basse à parois lisses, la partie haute formant une corniche périphérique tout autour et au-dessus de la partie basse, une rampe d'aspersion des parois lisses étant disposée sous ladite corniche, la partie haute étant destinée à loger des moyens d'alimentation en eau et de traitement de celle-ci, la partie basse étant destinée à loger des moyens d'entraînement du tapis.

De préférence les moyens d'alimentation en eau comprennent un robinet à pointeau raccordé au réseau et commandé par un flotteur à levier, un bac primaire à trop plein de réception de l'eau du robinet, une bâche de réception de l'eau du trop plein, ledit flotteur suivant le niveau d'eau dans la bâche, et une pompe destinée à pomper rapidement l'eau de la bâche pour l'éjecter en divers points du dispositif.

Plus particulièrement la colonne est constituée de deux boisseaux de forme sensiblement parallélépipèdique, à savoir un boisseau supérieur constituant ladite partie haute et un boisseau inférieur constituant ladite partie basse, le boisseau supérieur étant emboité sur le boisseau inférieur et étant refermé à sa partie supérieure par un bac à fleurs pourvu d'une mèche capillaire traversant ledit bac et trempant dans ledit bac primaire.

De préférence encore et plus particulièrement le boisseau inférieur comporte sur sa paroi en regard du tapis une ouverture comportant deux volets respectivement supérieur et inférieur, le volet supérieur étant articulé sur le boisseau et le volet inférieur étant articulé sur le volet supérieur, ledit volet étant ouvrable vers l'intérieur du boisseau, le volet inférieur étant destiné à être ouvert lors de la rotation du tapis tandis que le volet supérieur, restant normalement fermé ne s'ouvre que sous une poussée anormale venant de l'extérieur, des moyens de commande étant disposés du côté intérieur du volet supérieur pour commander l'arrêt immédiat du tapis en cas d'ouverture du volet supérieur.

Les caractéristiques précitées de la première catégorie procurent un certain nombre de résultats avantageux à savoir : en premier lieu, on notera que tandis que le tapis est destiné à recevoir les excrémentsaussi bien liquides que solides, la colonne, et plus spécialement sa partie inférieure, est destinée à recevoir les excréments liquides des chiens mâles, l'instinct de ces bêtes exigeant une surface verticale comme cela est bien connu ; c'est la raison pour laquelle la partie inférieure de la colonne est rincée périodiquement. On sait de plus que la présence de végétaux est attractive pour les animaux lorsqu'ils font leurs besoins ; c'est une des raisons pour lesquelles la colonne comporte à sa partie supérieure un bac à fleurs ; c'est aussi la raison pour laquelle les végétaux du bac sont arrosés de façon quasi-permanente par le moyen connu d'une mèche capillaire ; l'utilité du bac primaire tient à ce que l'eau véhiculée par la mèche doit être exempte de produits de traitement , ce qui ne serait pas le cas si la mèche plongeait dans la bâche.

Selon les caractéristiques de la deuxième catégorie, lesdits moyens de traitement de l'eau comprennent un réservoir d'agent désinfectant et des moyens-doseurs d'un agent désinfectant actionnés par le levier du flotteur lorsque ce dernier passe d'une position basse à une position haute, les moyens doseurs étant destinés à prélever une quantité prédéterminée d'agent désinfectant dans le réservoir pour l'injecter dans la bâche.

Toujours selon les caractéristiques de la deuxième catégorie, et compte tenu du fait que dans les dispositifs du genre précité le tapis roulant est supporté par au moins deux rouleaux dont un rouleau est moteur, lesdits moyens d'entraînement du tapis comprennent un groupe moto-réducteur, un renvoi d'angle comportant un arbre de sortie à poulie et un arbre d'entrée vertical perpendiculaire à l'arbre de sortie, ledit renvoi d'angle étant disposé au-dessous du dit groupe, un arbre de transmission sensiblement vertical reliant l'arbre de sortie du groupe à l'arbre d'entrée du renvoi, et une courroie reliant la poulie de sortie du renvoi à une poulie dudit rouleau-moteur.

De préférence le tapis est soutenu par quatre rouleaux supportés par un châssis formé de deux trapèzes entretoisés, les axes des rouleaux étant voisins des quatre angles des trapèzes, le tapis suivant un trajet divisé en quatre parties : une partie supérieure très légèrement inclinée sur l'horizontale, une première partie oblique dite avale, une partie inférieure légèrement inclinée sur l'horizontale et une deuxième partie dite amont.

De préférence encore une brosse cylindrique de nettoyage est disposée sur la partie avale du trajet du tapis, un râcloir fixe étant disposé le long d'une génératrice de ladite brosse, tandis qu'un rouleau d'essorage est disposé sur la partie amont du trajet, un râcloir fixe étant disposé le long d'une génératrice de ce rouleau.

De préférence encore des plateaux d'appui sont disposés, fixés sur le châssis, à l'intérieur de la boucle que forme le tapis, à chacune des parties supérieure et obliques.

De préférence encore au moins un des rouleaux disposés à un angle de la grande base du châssis trapézoïdal du tapis est sollicité en permanence par des ressorts tendeurs,dans le sens de l'allongement de cette base afin de conférer une tension permanente au tapis.

De préférence enfin l'ensemble formé par le châssis, les rouleaux, la brosse et le tapis ainsi que les organes annexes de tension et de nettoyage sont logés dans un caisson de forme parallélépipèdique dont le fond est en pente légère depuis sa périphérie vers un orifice d'évacuation disposé sensiblement à l'aplomb de ladite colonne.

Enfin les points d'éjection d'eau sont constitués par une rampe d'aspersion disposée sous la corniche, et par une rampe d'aspersion du tapis disposée en regard de la partie oblique avale du trajet du tapis, en amont de la brosse de nettoyage, lesdites rampes étant en relation avec la sortie d'eau de la pompe.

Les caractéristiques précitées de la seconde catégorie procurent elles aussi un certain nombre de résultats avantageux, à savoir : le fait que le groupe moto-réducteur à fonctionnement électrique soit situé au-dessus du renvoi d'angle et relié à lui par un arbre, et non par une chaîne ou par une courroie, et que le renvoi d'angle soit relié au tapis par une courroie, le tapis étant au-dessous du renvoi et le renvoi étant lui même au-dessous du groupe moto-réducteur, évite à de l'eau présente dans les parties inférieures du dispositif de remonter vers le moteur, lequel est ainsi maintenu au sec. A savoir aussi : le fait que l'ensemble constitué par le tapis, les rouleaux supports, la brosse, le rouleau d'essorage et leurs accessoires de nettoyage soit un ensemble unitaire permet le retrait relativement aisé de cet ensemble hors du caisson, après le retrait d'une partie de la bordure massive entourant le tapis, afin de permettre l'échange ou le nettoyage de certaines des parties de cet ensemble.

Le dispositif comprend aussi, incorporés dans la colonne, des organes de commande d'un cycle de fonctionnement dont les étapes successives, sont les suivantes : prise en compte de façon ultrasonore de la présence d'un animal sur le tapis, prise en compte du départ de l'animal, simultanément entrée en fonctionnement des moyens d'entraînement du tapis et de la pompe, puis après un certain temps arrêt de ces organes, remplissage de la bâche et déversement dosé de l'agent désinfectant jusqu'à remplissage de la bâche, et enfin attente d'un nouveau cycle de fonctionnement.

La présente invention sera mieux comprise et des détailes en relevant apparaîtront à la description qui va être faite d'une forme particulière de réalisation en relation avec les figures des planches annexées dans lesquelles :

- la fig.1 est une illustration en perspective d'un dispositif de l'invention, et

- la fig.2 est une coupe schématique à plus grande échelle, explicative des fonctions des organes internes.

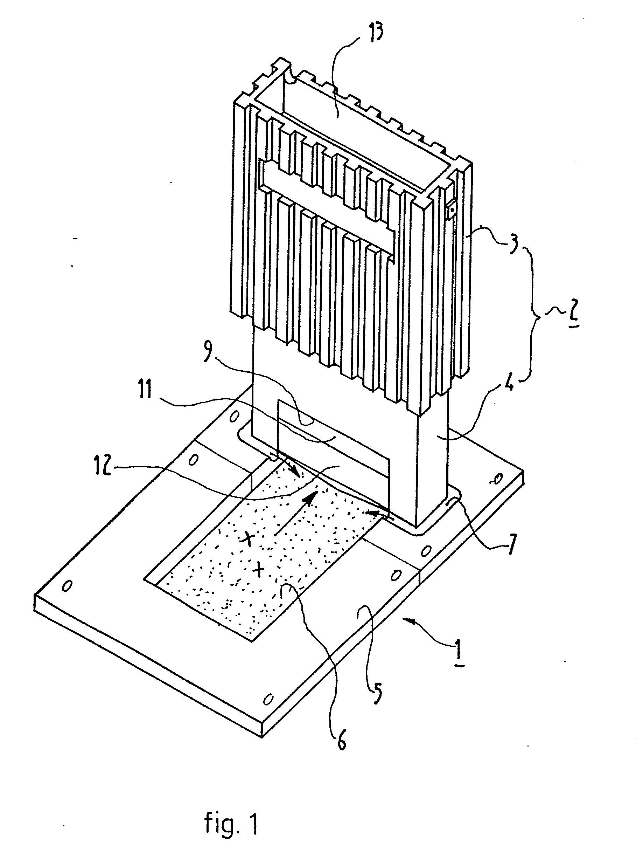

Sur la fig.1 un dispositif, ou îlot d'aisance pour animaux, conforme à l'invention comprend principalement une plate-forme 1 et une colonne 2 ; la plate-forme 1 est essentiellement constituée d'une bordure massive 5 entourant la base de la colonne et une ouverture centrale dans laquelle apparait un tapis 5 en herbe synthétique ; la bordure sera de préférence en deux parties, l'une entourant le tapis l'autre entourant la colonne ; la partie entourant la colonne comporte à la base de cette dernière un caniveau 7. La colonne comprend elle-même une partie supérieure 3 décorée et une partie inférieure 4 lisse ; la partie supérieure 3 surplombe en corniche la partie inférieure 4, la partie inférieure comportant en regard du tapis une ouverture 9 fermée par deux volets respectivement supérieur 11 et inférieur 12. La colonne 2 comporte à sa partie supérieure un bac à fleurs 13.

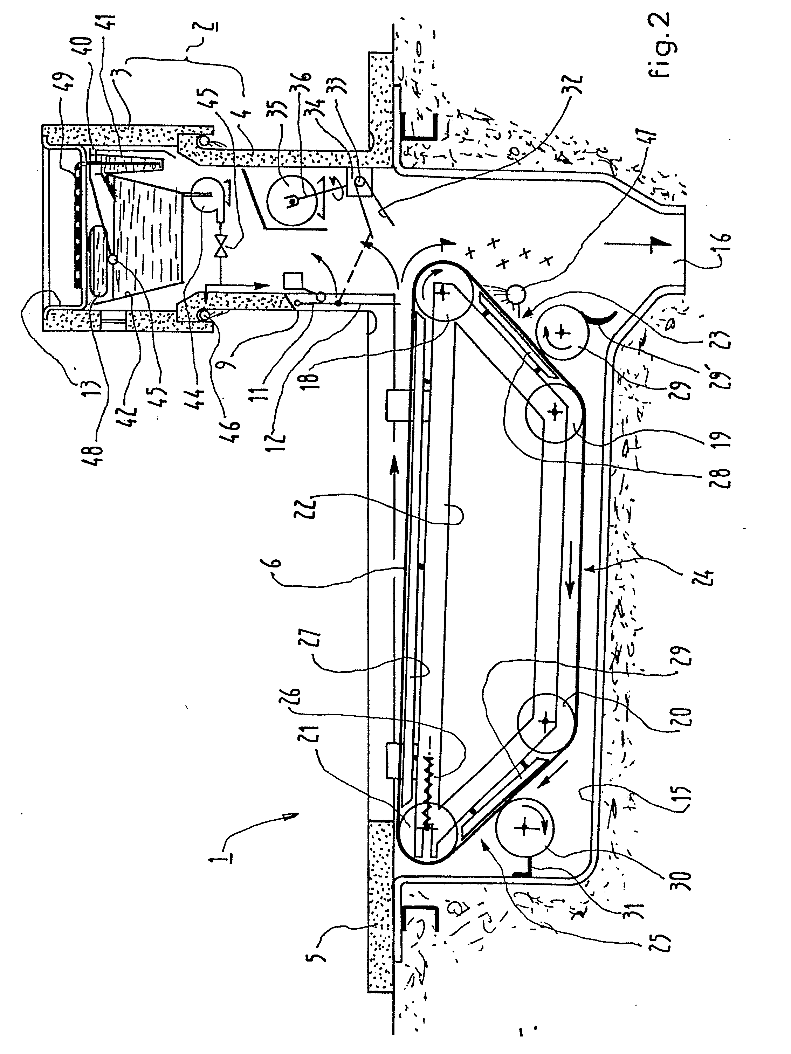

Sur la fig.2, les éléments précédemment désignés figurent avec les mêmes numéros de référence ; on remarque en outre que les parties 3 et 4 de la colonne ont la forme de boisseaux, le boisseau supérieur 3 étant emboité sur le boisseau inférieur et que la bordure 5 surmonte un bac de préférence monobloc 15 pourvu à l'aplomb de la colonne d'un orifice d'évacuation 16.

Le bac 15 sert de logement à un ensemble de tapis roulants comprenant le tapis 6 précité ayant une forme de bande ou de boucle refermée sur elle-même et des rouleaux 18 à 21 supportés par un châssis de forme trapézoïdale 22 ; la forme trapézoïdale du châssis définit un trajet en quatre parties du tapis 6 : une partie supérieure inclinée sur l'horizontale qui est celle visible depuis l'extérieur du dispositif, une première partie oblique 23 dit avale située sensiblement sous la colonne, une partie inférieure 24 parallèle à la partie supérieure et une seconde partie oblique 25 dite amont ; des plateaux respectivement 27, 28 et 19 servent d'appui au tapis dans ses parties supérieure et obliques 23 et 25, une brosse 29 frottant sur un râcloir fixe 29' presse le tapis contre le plateau 28, tandis qu'un rouleau d'essorage 30, frottant contre un râcloir 31 presse le tapis contre le plateau 29. Les rouleaux 18 à 21 sont légèrement concaves (plus minces au centre) et ils comportent des flasques d'extrémité pour guider le tapis et lui éviter un glissement latéral.

Le rouleau 18 est un rouleau moteur entraîné par une courroie crantée 32 encrantant sur un arbre de sortie 33, d'un renvoi d'angle 34 recevant son mouvement d'un groupe moto-réducteur par l'intermédiaire d'un arbre sensible 36. Les organes 32 à 36 constituent les moyens d'entraînement du tapis et sont logés dans la partie inférieure de la colonne.

Le rouleau 21 est disposé à un angle de la grande base du châssis trapézoïdal et il est sollicité en permanence par un couple de ressorts tendeurs tels que 26, ce qui confère une tension permanente au tapis 6.

Dans le boisseau supérieur 3 sont logés des moyens d'alimentation en eau qui comprennent un robinet à pointeau 40 raccordé au réseau, un bac primaire à trop plein 41 recevant l'eau du robinet et la déversant dans un bâche 42 de plus grande capacité dans laquelle un flotteur 43 suit le niveau d'eau dans la bâche pour commander l'ouverture ou la fermeture du robinet.

Un réservoir 48 contenant des agents de traitement de l'eau de la bâche tels qu'agents désinfectants est disposé au-dessus de la bâche, sous le bac à fleurs 13 ; des moyens de dosage, non représentés sur les figures permettent d'injecter dans la bâche et de préférence au cours du remplissage de celle-ci une quantité déterminée d'agents désinfectants ; ces moyens de dosage peuvent être une petite électrovanne pendant une période de temps déterminée, peuvent être encore une petite pompe à piston fonctionnant sous l'impulsion d'un électro-aimant, peuvent être encore une pompe à piston fonctionnant sous l'impulsion du bras du flotteur.

Une pompe 44 accouplée à une électrovanne 45 est destinée à pomper l'eau de la bâche pour la diriger sous pression vers une première rampe 46 disposée sous le rebord en corniche que forme le boisseau supérieur au-dessus du boisseau inférieur, et vers une seconde rampe 47 disposée en regard de la partie oblique avale du tapis.

Le bac à fleurs 13 sert de couvercle au boisseau supérieur et on remarque qu'une mèche 49 passe à travers le fond du bac pour plonger dans le bac primaire 41 ; cette mèche est destinée à maintenir l'humidité de la terre du bac à fleurs.

On a décrit ci-dessus un dispositif dans lequel la présence d'un animal et son absence sont détectées de façon ultrasonore et servent à initier le cycle de fonctionnement ; à titre de variante, l'invention propose aussi de détecter la présence de l'animal par la détection d'un léger déplacement du plateau horizontal 27 ; dans ce cas celui-ci est monté suspendu sur le châssis avec un léger déboitement à l'encontre du ressort et son déplacement vertical est détecté par un contact électrique ou tout autre détecteur de proximité inductif ou capacitif ; dans ce cas encore les ultrasons ne sont utilisés que comme moyens d'appels des animaux.

Bien que l'on ait décrit et représenté une forme particulière et préférée de réalisation de l'invention, il doit être compris que la portée de cette dernière n'est pas limitée à cette forme mais qu'elle s'étend aux caractéristiques générales prises isolément ou en combinaison telles que ces caractéristiques ont été énoncées plus haut.

R E V E N D I C A T I O N S
————————————————

1.- Dispositif de nécessité pour animaux tels que chiens, du genre comprenant un tapis roulant sur lequel l'animal est amené à faire ses besoins  et des moyens de nettoyage du tapis incorporés dans une plateforme située sensiblement au niveau du sol, et comprenant en outre une colonne contenant les moyens de commande de la rotation du tapis, caractérisé :

en ce qu'il comprend une bordure massive entourant le tapis et la colonne, ladite bordure massive comportant un caniveau collecteur autour du pied de la colonne, et

en ce que la colonne comprend une une partie haute et une partie basse  à parois lisses, la partie haute formant une corniche périphérique tout autour et au-dessus de la partie basse, une rampe d'aspersion des parois lisses étant disposée sous ladite corniche, la partie haute étant destinée à loger des moyens d'alimentation en eau et de traitement de celle-ci, la partie basse étant destinée à loger des moyens d'entraînement du tapis ;

2.- Dispositif selon la revendication 1, caractérisé :

en ce que lesdits moyens d'alimentation en eau comprennent un robinet à pointeau raccordé au réseau et commandé par un flotteur à levier, un bac primaire à trop plein de réception de l'eau du robinet, une bâche de réception de l'eau du trop plein, ledit flotteur suivant le niveau d'eau dans la bâche, et une pompe destinée à pomper rapidement l'eau de la bâche pour l'éjecter en divers points du dispositif ;

3.- Dispositif selon la revendication 2, caractérisé :

en ce que lesdits moyens de traitement de l'eau comprennent un réservoir d'agent désinfectant et moyens-doseurs d'agent désinfectant actionnés par le levier du flotteur lorsque ce dernier passe d'une position basse à une position haute, les moyens doseurs étant destinés à prélever une quantité prédéterminée d'agent désinfectant dans le réservoir pour l'injecter dans la bâche ;

4.- Dispositif selon la revendication 1, dans lequel le tapis roulant est supporté par au moins deux rouleaux dont un rouleau moteur, caractérisé :

en ce que lesdits moyens d'entraînement du tapis comprennent un groupe moto-réducteur, un renvoi d'angle comportant un arbre de sortie à poulie et un arbre d'entrée vertical perpendiculaire à l'arbre de sortie, ledit renvoi d'angle étant disposé au-dessous dudit groupe, un arbre de transmission sensiblement vertical reliant l'arbre de sortie du groupe à l'arbre d'entrée du renvoi, et une courroie reliant la poulie de sortie du renvoi à une poulie dudit rouleau-moteur ;

5.- Dispositif selon la revendication 4, caractérisé :

en ce que le tapis est soutenu par quatre rouleaux supportés par un châssis formé de deux trapèzes entretoisés, les axes des rouleaux étant voisins des quatre angles des trapèzes, le tapis suivant un trajet divisé en quatre parties : une partie supérieure très légèrement inclinée sur l'horizontale, une première partie oblique dite aval, une partie inférieure légèrement inclinée sur l'horizontale et une deuxième partie dite amont,

en ce qu'une brosse cylindrique de nettoyage est disposée sur la partie avale du trajet du tapis, un râcloir fixe étant disposé le long d'une génératrice de ladite brosse, tandis qu'un rouleau d'essorage est disposé sur la partie amont du trajet, un râcloir fixe étant disposé le long d'une génératrice de ce rouleau, et

en ce que des plateaux d'appui sont disposés, fixés sur le châssis, à l'intérieur du bac que forme le tapis dans chacune des parties supérieure et obliques ;

6.- Dispositif selon la revendication 5, caractérisé :

en ce qu'au moins l'un des rouleaux disposés à un angle de la grande base du châssis trapézoïdal du tapis est sollicité en permanence par des ressorts tendeurs dans le sens de l'allongement de cette base afin de conférer une tension permanente au tapis ;

7.- Dispositif selon la revendication 6, caractérisé : en ce que l'ensemble formé par le châssis, les rouleaux, la brosse et le tapis ainsi que les organes annexes de tension et de nettoyage sont logés dans un caisson de forme parallélépipèdique dont le fond est en pente légère depuis sa périphérie vers un orifice d'évacuation disposé sensiblement à l'aplomb de ladite colonne ;

8.- Dispositif selon la revendication 2, caractérisé : en ce que ladite colonne est constituée de deux boisseaux de forme sensiblement parallélépipèdique, à savoir un boisseau supérieur constituant ladite partie haute et un boisseau inférieur constituant ladite partie basse, le boisseau supérieur étant emboîté sur le boisseau inférieur, et étant refermé à sa partie supérieure par un bac à fleurs pourvu d'une mèche capillaire traversant ledit bac et trempant dans ledit bac primaire ;

9.- Dispositif selon la revendication 8, caractérisé : en ce que le boisseau inférieur comporte sur sa paroi en regard du tapis une ouverture comportant deux volets respectivement supérieur et inférieur, le volet supérieur étant articulé sur le boisseau et le volet inférieur étant articulé sur le volet supérieur ledit volet étant ouvrable vers l'intérieur du boisseau, le volet inférieur étant destiné à être ouvert lors de la rotation du tapis tandis que le volet supérieur, restant normalement fermé ne s'ouvre que sous une poussée anormale venant de l'extérieur, des moyens de commande étant disposés du côté intérieur du volet supérieur pour commander l'arrêt immédiat du tapis en cas d'ouverture du volet supérieur ;

**0102861**

10.- Dispositif selon les revendications 2 et 5, caractérisé : en ce que lesdits point d'éjection d'eau sont constitués par une rampe d'aspersion disposée sous la corniche, et par une rampe d'aspersion du tapis disposée en regard de la partie oblique avale du trajet du tapis, en amont de la brosse de nettoyage, lesdites rampes étant en relation avec la sortie d'eau de la pompe.

0102861

fig. 1

PL.: 2/2

fig.2

010 2861

# 0102861

Office européen des brevets

## RAPPORT DE RECHERCHE EUROPEENNE

Numéro de la demande

EP 83 40 1441

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| Y | US-A-4 098 229 (HAYNES) <br> * Figures 1-4,6,8; colonne 2, ligne 48 - colonne 4, ligne 26 * <br><br> --- | 1,6 | A 01 K 1/01 <br> E 03 D 5/01 |
| Y | FR-A-2 406 388 (MAILLE) <br> * Figure 1; page 1, ligne 16 - page 2, ligne 30 * <br><br> --- | 1 | |
| A | FR-A-2 488 487 (ZILBER) <br><br> ----- | | |

DOMAINES TECHNIQUES RECHERCHES (Int. Cl. ³)

A 01 K

Le présent rapport de recherche a été établi pour toutes les revendications

| Lieu de la recherche <br> LA HAYE | Date d'achèvement de la recherche <br> 20-10-1983 | Examinateur <br> VILBIG K |
|---|---|---|